# EUROPEAN PATENT APPLICATION

(11) **EP 2 316 626 A1**
(43) Date of publication of application: **04.05.2011**
(21) Application number: 09174138.9
(22) Date of filing: 27.10.2009
(51) Int. Cl.: B29B 11/14, B29B 11/08, B29C 49/64, B29C 35/08

(54) **Preform for making a blow-molded container and having a concave gate portion, injection mold stack and process for making the preform, process for making the container and container**

(71) Applicant: LA SEDA DE BARCELONA S.A., 08820 El Prat De Llobregat, Barcelona (ES)
(72) Inventor: Windelinckx, Steve, 2980 Zoersel (BE)
(74) Representative: Matkowska, Franck

(57) **Abstract**

The preform (P) is suitable for subsequent blow-molding and comprises a neck portion (1) terminated by a pouring opening (10), a gate portion (3) forming a closed bottom end, and a body portion (2) extending between said gate portion (3) and said neck portion (1). Said gate portion (3) comprises a closed bottom end sub-portion (31) and a concave gate sub-portion (32). The closed bottom end sub-portion (31) comprises a bottom part (311) terminated by a central vestige (310) and having a convex or conical outer face (311b). The concave gate sub-portion (32) extends from said bottom part (311) towards the body portion (2), and the outer face (32b) of said concave gate sub-portion (32) is concave.
An injection mold stack for making the preform, a process for making the preform, a process for making a container and such a container are also described.

## Description

### Technical field

The present invention relates to the field of injection blow-molded plastic containers, and more especially to a plastic preform suitable for subsequent blow-molding and having an improved design.

### Prior art

A well-known technique for manufacturing a thermoplastic container is the so-called injection stretch-blow molding technique, wherein (first step) a thermoplastic material is injected in a mould in order to form a preform (semi-finish product), and subsequently (second step) said preform is biaxially stretched in a mould in order to form a rigid hollow container of any kind of shapes and sizes, like for example a bottle-shaped container, a jar, etc.... Depending of the injection step, the preform, and thereby the final blow-molded container, can have a monolayer structure or a multilayer structure (for example if a co-injection and/or sequential injection step is performed).

In a so-called "one stage process", the second step (stretch-blow moulding) is performed in line immediately after the first step (preform injection). In a so-called "two stages process", the second step (stretch-blow moulding) is postponed, and a reheating of the preform is performed before the stretch-blow molding operation.

There is a wide variety of thermoplastic materials that can be processed by injection moulding used for making a preform. By way of example only, the most common and widely used thermoplastic materials are polyester material, in particular homo or copolymer of PET (polyethylene terephtalate).

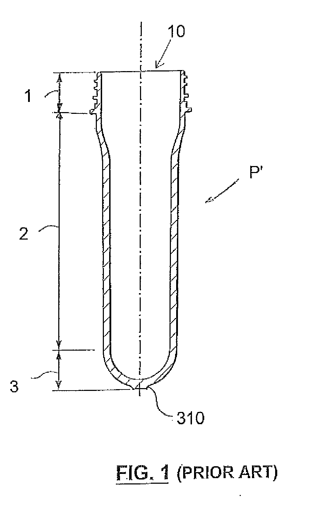

Figure 1 shows a standard preform P' that is commonly and widely used in the prior art for making a blow-molded container. Said standard preform is made of a substantially tubular body that is closed at its bottom end and has a pouring opening at its upper end. More especially, said preform P' comprises a neck portion 1 terminated by a pouring opening 10, a so-called gate portion forming a closed bottom end, and a body portion 2 extending between said gate portion 3 and said neck portion 1. Typically, the gate portion 3 is made of a convex portion having substantially an hemi-spherical shape, and terminated by a small central protruding vestige 310. The size of this vestige 310 corresponds to the size of the output orifice of the hot runner nozzle that is being used for injecting the plastic material in the mould.

When this preform P' is blow molded in a mould, the neck portion 1 is used for maintaining the preform in the blowing mould, and is thus not stretched. The body portion 2 is biaxially stretched (in a longitudinal direction and in a radial direction) in order to form a container body of higher volume. The gate portion 3 is also biaxailly stretched, but with a high radial stretch ratio and a low longitudinal stretch ratio, in order to form typically the bottom base of the final blow-molded container.

Figure 2 shows another preform P" of the prior art, disclosed notably in PCT application WO-A-2009/076745, wherein the gate portion 3 is conical and is terminated by a flat and non protruding vestige 310. According to PCT application WO-A- 2009/076745, this conical shape of the gate portion would improve the reheat of the preform.

The stretching ratios 3 of the gate portion and the weight of material in the gate portion 3 have an impact on the mechanical properties of the bottom base of the final blow-molded container. In particular, it is known that with higher stretch ratios, you can obtain a final blow-molded container having a bottom base of higher mechanical rigidity. It is also known that with higher amount of material in the gate portion 3 of a preform, you can obtain (for the same stretch ratio) a wall of higher thickness in the bottom base of the final blow-molded container, and thereby a bottom base of higher mechanical rigidity. But when the weight of material is increased in the preform gate portion 3, the wall of the preform in the gate portion is thicker, and is detrimentally more difficult to stretch and also more difficult to reheat quickly and correctly in a two-stages process. Furthermore, with high amount of material in the gate portion 3, you detrimentally increase the manufacturing cost of the preform, because of the molding material purchase cost. There is thus a strong need in the field to lower the preform weight in order to lower the production cost.

### Objective of the invention

A main objective of the invention is to propose a novel preform suitable for subsequent blow-molding and having a novel design that improve the stretching of the gate portion of the preform.

### Summary of the invention

This objective is achieved by the preform of claim 1. This preform comprises a neck portion terminated by a pouring opening, a gate portion forming a closed bottom end, and a body portion extending between said gate portion and said neck portion; said gate portion comprises a closed bottom end sub-portion and a concave gate sub-portion; the closed bottom end sub-portion comprises a bottom part terminated by a central vestige and having a convex or conical outer face ; the concave gate sub-portion extends towards the body portion from said bottom part, and the outer face of said concave gate sub-portion is concave.

The inventors demonstrated that against all expectations, it was possible to correctly stretch a gate portion with such a novel concave sub-portion for forming the base of a final blow molded container.

Thanks to this concave gate sub-portion, higher stretch ratios can be advantageously practiced for forming the bottom base portion of the container, and the amount of material can thus be lowered in the preform gate portion, without prejudice for the mechanical properties, and in particular for the mechanical rigidity, of the bottom base of the final container.

Another object of the invention is an injection mold stack as the one defined in claim 9 or 10.

Another object of the invention is a process for making the aforesaid a preform with a concave gate sub-portion, and comprising a step of injecting melted molding material in the cavity gate of the injection mold stack defined in claim 9 or 10.

Another object of the invention is a process for making a container, wherein the aforesaid preform with a concave gate sub-portion is blow-molded in a mould, and in particular is mechanically stretched and blow-molded in a mold.

Another object of the invention is blow-molded container, and more especially a biaxailly-stretched and blow molded container obtained from the aforesaid preform.

### Brief description of the drawings

The technical characteristics and advantages of the invention will appear more clearly on reading the following detailed description which is made by way of non-exhaustive and non-limiting example, and with reference to the appended drawings, as follows:
- Figure 1 (previously described) shows a thermoplastic preform of the prior art with an hemispherical gate portion,
- Figure 2 (previously described) shows a thermoplastic preform of the prior art with conical gate portion,
- Figure 3 shows an example of a preform of the invention with a concave gate sub-portion
- Figure 4 is a longitudinal cross-section of the preform of figure 3,
- Figure 5 is a longitudinal cross-section of an injection mold stack of the invention.

### Detailed description

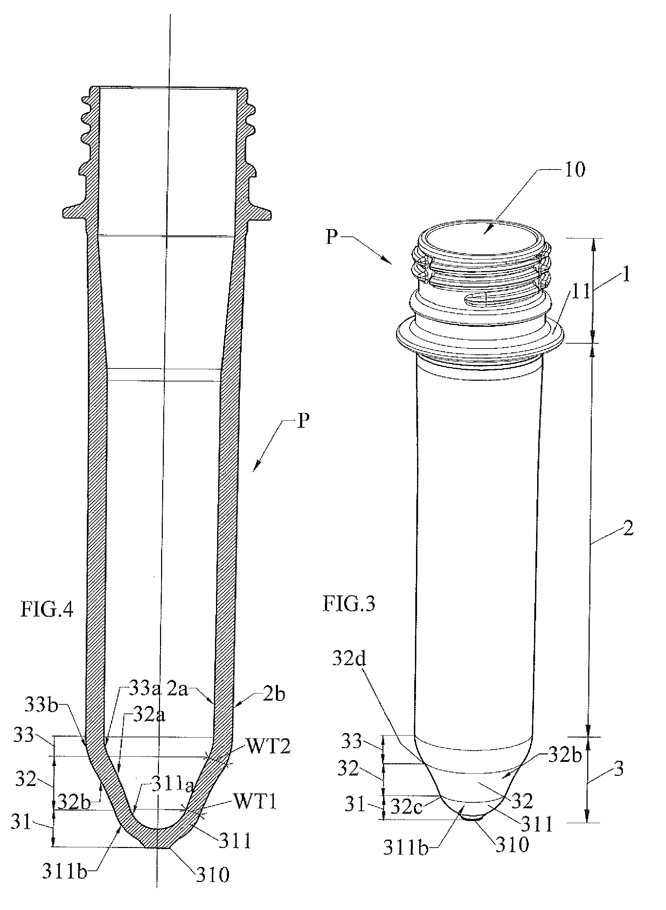

Figures 3 and 4 show a plastic preform P of the invention that is suitable for subsequent blow moulding.

This preform P can be made of any known thermoplastic material that can be processed by injection molding in order to form a preform. Polyester polymers, and in particular homo or copolymer of PET, are the most commonly used thermoplastic materials, but the invention is however not limited to these particular polymers. In addition, in the particular example of figure 4, the preform has a monolayer structure. Within the scope of the invention, the preform P can also have a multilayer structure.

The preform P has a tubular body made a neck portion 1 terminated by a pouring opening 10, a gate portion 3 forming a closed bottom end, and a substantially cylindrical body portion 2 extending between said gate portion 3 and said neck portion 1. The neck portion 1 and the body portion 2 are common and known in the prior art. In particular the neck portion 1 comprises a protruding neck support ring 11 that is commonly used during the blowing step for supporting and immobilizing the preform P in the mold cavity.

The gate portion 3 of the preform P has a particular novel profile. In particular in the embodiment depicted on figures 3 and 4, the gate portion 3 is made of three sub-portions: a closed bottom end sub-portion 31, a concave sub-portion, 32, and an upper transition sub-portion 33.

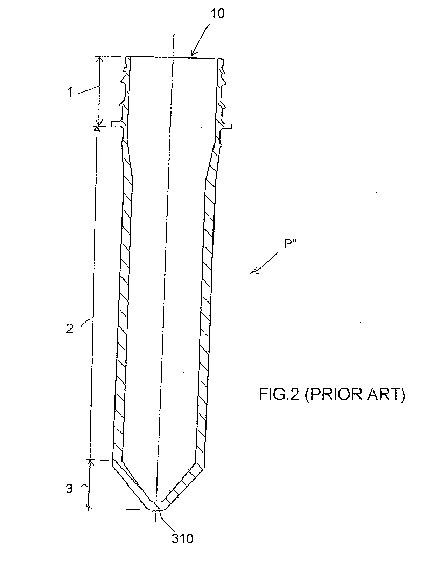

The closed bottom end sub-portion 31 is constituted by a convex bottom part 311 terminated by a small central protruding vestige 310. The outer face 311b of this convex bottom part 311 is convex on the whole periphery of the preform and more particularly is substantially hemispherical. The inner face 311a of this convex bottom part 311 is concave on the whole periphery of the preform and more particularly is substantially hemispherical. The protruding central vestige 310 corresponds to the injection point of the plastic material in the mould cavity gate. In another variant, this vestige 310 can be a non protruding vestige, like for example the vestige 310 of the preform P" of figure 2.

The concave sub-portion 32 extends from this closed bottom end sub-portion 31, towards the body portion 2. According to the invention, the outer face 32b of said concave gate sub-portion 32 is concave on the whole periphery of the preform.

In the particular embodiment of figure 4, the inner face 32a of said concave gate sub-portion 32 is convex on the whole periphery of the preform.

The transition sub-portion 33 joins the concave sub-portion 32 to the body portion 2. The inner face 33a of said transition sub-portion 33 is concave on the whole periphery of the preform, .and the outer face 33b of said transition sub-portion 33 is convex on the whole periphery of the preform.

More particularly, the curvature radius of said inner face 33a is calculated in order to obtain a smooth transition between the convex inner face 32a of the concave sub-portion 32 and the cylindrical inner face 2a of the body portion 2. The curvature radius of said outer face 33b is calculated in order to obtain a smooth transition between the concave outer face 32b of the concave sub-portion 32 and the cylindrical outer face 2b of the body portion 2.

Preferably, but not necessarily, in the embodiment of figure 4, the wall thickness (WT) of the concave gate sub-portion 32 is increasing from its lower end 32c towards its upper end 32d (WT1 <WT2). This characteristic is however not compulsory for practicing the invention and the wall thickness (WT) of the concave gate sub-portion 32 could have a different profile, and in particular could be constant over the whole length of the concave sub-portion 32.

The invention is not limited to a preform having the particular closed bottom end portion 31 of figure 4. In another variant, outer face 311b of the bottom part 311 can be conical. In another variant, the inner face 32a of the concave gate portion 32 is not necessarily convex, but can be also conical or concave. In another variant, the inner face 311a of the bottom part 311 is not necessarily concave and hemispherical, but can have a different profile.

The preform P is obtained by injecting a melted thermoplastic material in a mould cavity of suitable shape .

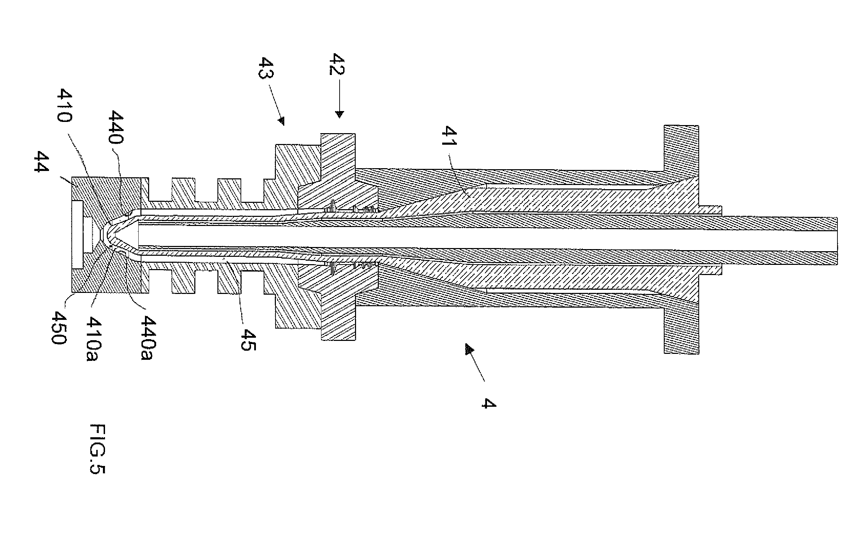

Figure 5 shows an example of a injection mold stack than can be used for making preform P. Knowingly in the prior art, this mold stack 4 comprises a core insert 41, a split insert pair 42, a cavity insert 43 and a gate insert 44. In use, the core insert 41, the split insert pair 42, the cavity insert 43 and the gate insert 44 define a molding cavity 45, into which the molding material (for example PET or other suitable molding material) can be injected in order to form the preform. More particularly, in use the inner face 440 of the gate insert 44 and the outer face 410 of the end part of the core insert 41 define a cavity gate 450, in which the injected molding material is molded and forms the gate portion 3 of the preform.

The mold stack of figure 5 only differs from mold stacks of the prior art by the geometry of cavity gate 450 that is adapted for molding a preform with at least a concave sub-portion like the one 32 of figure 4. To this end the inner face 440 of the gate insert 44 comprises a convex sub-portion 440a for molding the concave outer face 32b of the preform and the outer face 410 of the end part of the core insert 41 comprises a concave sub-portion 410a facing the said convex portion 440a, and used for molding the convex inner face 32a of sub-portion 32 of the preform P.

In the particular embodiment of figure 5, the mold stack 4 is of the core-lock type. Within the scope of the invention, the mold stack is not necessarily of the core-lock type, but can be of any other type, including notably also mold stack of the cavity-lock type, provided that the molding cavity gate 450 has the required geometry for obtaining the novel gate portion 3 of the preform of the invention.

Once the preform P is being injected and cooled down, it is knowingly ejected from the cavity mold and it can then be used in a subsequent blow-molding step, either in a one-stage process or in a two-stages process ( i.e. with a reheat step of the preform before blow molding, for example by using infra-red radiations).

The blowing step of the preform 3 in mold (blow-molding step) in order to form a final container of higher volume is known per se by one skilled n the art and will not be described in detailed. In particular, during this blowing step the hot preform P is knowingly biaxially stretched in a mould at least by means of air blown inside the preform, and optionally by means of a blowing stretching rod that is also used for mechanically stretch the preform.

During this blow-molding step, the neck portion 1 is not stretched; the body portion 2 is biaxially stretched (in a longitudinal direction and in a radial direction) in order to form the container body of higher volume; the gate portion 3 is also biaxially stretched, but with a high radial stretch ratio and a low longitudinal stretch ratio, in order to form typically the bottom base of the final blow-molded container.

Thanks to the concave gate sub-portion 32, the gate portion 3 of the preform P can be advantageously stretched with higher stretch ratios, than the stretch ratios practiced with a standard preform P' ( figure 1) or with a conical gate preform P"( figure 2). With the same weight of material in the gate portion 3, the final container can have advantageously a bottom base with improved mechanical properties, especially higher rigidity. Thanks to the concave gate sub-portion 32 of the invention, one can also advantageously lower the weight of material in the gate portion 3 of the preform, said weight reduction being partly or wholly compensated by the higher stretch ratios of the gate portion 3.

## Claims

1. A preform (P) suitable for subsequent blow-molding and comprising a neck portion (1) terminated by a pouring opening (10), a gate portion (3) forming a closed bottom end, and a body portion (2) extending between said gate portion (3) and said neck portion (1), wherein said gate portion (3) comprises a closed bottom end sub-portion (31) and a concave gate sub-portion (32), wherein the closed bottom end sub-portion (31) comprises a bottom part (311) terminated by a central vestige (310) and having a convex or conical outer face (311b), wherein the concave gate sub-portion (32) extends from said bottom part (311) towards the body portion (2), and wherein the outer face (32b) of said concave gate sub-portion (32) is concave.

2. The preform of claim 1, wherein the inner face (32a) of said concave gate sub-portion (32) is convex.

3. The preform of claim 1 or 2, wherein the outer face (311b) of the bottom part (311) is substantially hemi-spherical.

4. The preform of any one of claims 1 to 3, wherein the inner face (311a) of the bottom part (311) is concave.

5. The preform of claim 4, wherein the inner face (311a) of the bottom part (311) is substantially hemispherical.

6. The preform of any one of claims 1 to 5, wherein the wall thickness (WT) of the concave gate sub-portion (32) is increasing from its lower end (32c) towards its upper end (32d).

7. The preform of any one of claims 1 to 6, wherein the gate portion (3) comprises a transition sub-portion (33) that joins the concave gate sub-portion (32) to the body portion (2), and wherein the outer face (33b) of said transition sub-portion (33) is convex.

8. The preform of claim 7, wherein the inner face (33a) of said transition sub-portion (33) is concave.

9. An injection mold stack (4) for making a preform (P) of any one of claims 1 to 8, comprising a core insert (41) and a gate insert (44) adapted to define a molding cavity gate (450) with the end part of the core insert (41), wherein the molding cavity gate (450) comprises a sub-portion adapted to mold the concave gate sub-portion (32) of the preform (P) and delimited between a convex sub-portion (440a) of the inner face (440) of the gate insert (44) and a sub-portion (410a) of the outer face (410) of the end part of the core insert (41).

10. The injection mold stack of claim 9, wherein the sub-portion that is adapted to mold the concave gate sub-portion (32) of the preform (P) is delimited between a convex sub-portion (440a) of the inner face (440) of the gate insert (44) and a concave sub-portion (410a) of the outer face (410) of the end part of the core insert (41).

11. A process for making a preform (P) of any one of claims 1 to 8, comprising a step of injecting melted molding material in the cavity gate (450) of the injection mold stack (4) of claim 9 or 10.

12. A process for making a container, wherein a preform of any one of claims 1 to 8 is blow-molded in a mould, and in particular is mechanically stretched and blow-molded in a mold.

13. A blow-molded container, and more especially a biaxially-stretched and blow molded container obtained from the preform of any one of claims 1 to 8.
